Europäisches Patentamt

European Patent Office

Office européen des brevets

(19)

(11) Publication number: **0 055 595**

**B1**

# EUROPEAN PATENT SPECIFICATION

(12)

(45) Date of publication of patent specification: **13.06.84**

(51) Int. Cl.³: **B 65 D 1/02**

(21) Application number: **81306063.9**

(22) Date of filing: **22.12.81**

(54) Container of polyethylene terephthalate or saturated polyester resin.

(30) Priority: **26.12.80 JP 191163/80**

(43) Date of publication of application:
**07.07.82 Bulletin 82/27**

(45) Publication of the grant of the patent:
**13.06.84 Bulletin 84/24**

(84) Designated Contracting States:
**CH DE FR GB IT LI NL**

(56) References cited:
**AT - B - 323 004**
**DE - A - 2 214 520**
**DE - A - 2 746 951**
**DE - A - 3 002 189**
**GB - A - 1 341 848**
**GB - A - 1 395 370**
**GB - A - 2 040 256**

(73) Proprietor: **Yoshino Kogyosho CO., LTD.**
**No 3-2-6, Ojima 3-chome, Koto-ku**
**Tokyo 136 (JP)**

(72) Inventor: **Ota, Akiho**
**No. 3-27-3, Maehara Higashi**
**Funabashi-Shi Chiba-Ken (JP)**
Inventor: **Kushida, Hideo**
**No. 1 0-22-19, Yachiyo-Shi**
**Chiba-Ken (JP)**

(74) Representative: **Heath, Derek James**
**Bromhead & Co. 30 Cursitor Street Chancery Lane**
**London EC4A 1LT (GB)**

Courier Press, Leamington Spa, England.

## Description

The present invention relates to a hollow blow-moulded container of a biaxially oriented polyethylene terephthalate or saturated polyester resin.

Polyethylene terephthalate has a wide range of applications as the material of containers such as bottles and the like because it has excellent physical properties such as gas barrier properties and so forth. Containers of polyethylene terephthalate resin are ordinarily formed by blow-moulding a preformed cylindrical piece with a bottom. However, as the neck section of the container is not biaxially oriented in the blow-moulding, the resultant container has unstable physical properties and is susceptible to thermal deformation.

An improved form of container which overcomes these drawbacks is described in DE—A—2 746 951. The container described therein is a hollow, blow-moulded container of a biaxially oriented polyethylene terephthalate or saturated polyester resin having a neck section at least part of which is crystallised and a body which is coloured transparently or opaquely and is thermoset. The neck portion of the container may thus be rigidly formed with stable physical properties, while the contents of the container can be effectively shielded from external light.

The aim of the present invention is to provide a yet more improved blow-moulded container of a biaxially oriented polyethylene terephthalate or saturated polyester resin in which the upper end of the neck section is thickly strengthened and the lower half of the upper end of the neck section is thinly formed to reduce the quantity of the material thereof. In addition, the upper half of the upper part of the neck section is increased in diameter so as to be larger than the lower half of the upper part thereof in order to secure the exact mounting of a cap thereon. Further, the upper part of the neck section is crystallised to secure the exact tightening of the cap.

The invention is accordingly directed to a hollow blow-moulded container of a biaxially oriented polyethylene terephthalate or saturated polyester resin having a neck section at least part of which is crystallised and a thermoset body which is coloured transparently or opaquely, characterised in that:

(a) the upper part only of the neck section is entirely crystallised and is thicker and of larger outer diameter than an intermediate part of the neck section, which intermediate part is itself thicker than the body;

(b) the upper half of the upper part of the neck section is thicker and of larger outer diameter than the lower half of the upper part of the neck section; and

(c) the neck section is stepped between the upper half of the upper part of the neck section and the lower half of that upper part, and also between the lower half of the upper part of the neck section and the intermediate part of the neck section.

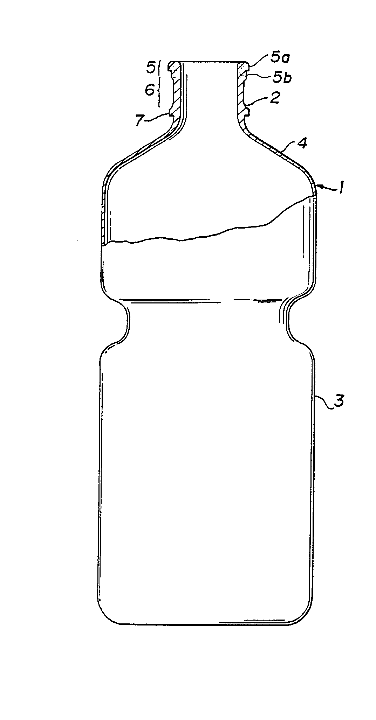

An example of a container made in accordance with the invention is illustrated in the part-sectional side view shown in the accompanying drawing.

The hollow blow-moulded bottle-shaped container 1 of a biaxially oriented saturated polyester resin shown in the drawing comprises a body, a neck section 2 and a shoulder 4.

The neck section 2 of the container 1 is formed much thicker than the body because the neck section of a preformed parison is held in a mould and high pressure air is blown into the parison while longitudinally orienting the parison to orient the parison biaxially into the blow-moulded bottle-shaped container. The neck section of the parison held by the mould is not oriented, and hence becomes a thick neck section of the blow-moulded bottle-shaped container.

The upper part 5 of the neck section 2 of the container 1 is so formed as to be thicker and larger in outer diameter than the intermediate section 6 of the neck portion 2, and the upper half 5a of the upper part 5 is formed thicker and larger in outer diameter than the lower half 5b of the upper part 5. A stepped part is provided between the upper half 5a and the lower half 5b as well as between the lower half 5b of the upper part and the intermediate part. It is to be noted that the thickness of the upper half of the upper part is thickened to provide the strengh necessary for a capping step of the neck section, while the lower half is thickened by an amount lower than the lower half of the upper part. A reinforcing projecting strip 7 is formed peripherally on the lower outer surface of the neck section of the container.

The upper part, and hence the upper half and the lower half thereof, of the neck section of the container, is crystallised. The crystallisation is performed by heating it to a higher temperature than a glass transition temperature and gradually cooling it. In order to crystallise only the upper part of the neck section of the container, a heat shielding plate is wound on the neck section and the plate is removed after it is heated. The upper part of the neck section of the container is discoloured due to the crystallisation. When the bottle-shaped container is, for example, colourless, the crystallised part becomes white like milk, and when it is coloured the crystallised part becomes opaque of a colour diluted from the original colour of the container.

It should be understood from the foregoing description that, since only the upper part of the neck section of the container is thickened and the upper half of the upper part of the neck section is further thickened than the lower half of the upper part thereof, the necessary upper end of the neck section of the container is thickly strengthened and the lower half part of the upper end of the neck section is thinly formed to reduce the quantity of the material thereof. It should also be appreciated that, since the upper half of the upper part of the neck section is increased in diameter larger than the lower half of the upper part of the neck section thereof, the exact mounting of a cap can be secured to the bottle-shaped container. It should be noted that, since the upper part of the neck section of the container is crystallised on the surface, the exact tightening of the cap can be secured to the bottle-shaped container, and since the crystallised part of the neck section of the container can be clarified in its external appearance as a crystallised biaxial orientation bottle-shaped container due to the different colour of the non-crystallised part of the neck section with its excellently coloured appearance, the value of the commodity of the container is enhanced.

## Claim

1. A hollow blow-moulded container (1) of a biaxially oriented polyethylene terephthalate or saturated polyester resin having a neck portion (2) at least part of which is crystallized and a thermoset body (3) which is coloured transparently or opaquely, *characterised* in that:

(a) the upper part (5) only of the neck section (2) is entirely crystallised and is thicker and of larger outer diameter than an intermediate part (6) of the neck section (2), which intermediate part is itself thicker than the body (3);

(b) the upper half (5a) of the upper part (5) of the neck section (2) is thicker and of larger outer diameter than the lower half (5b) of the upper part (5) of the neck section (2); and

(c) the neck section (2) is stepped between the upper half (5a) of the upper part (5) of the neck section (2) and the lower half (5b) of that upper part, and also between the lower half (5b) of the upper part (5) of the neck section (2) and the intermediate part (6) of the neck section (2).

## Revendication

1. Récipient creux (1) moulé par soufflage en résine de téréphthalate de polyéthylène ou de polyester saturé à orientation biaxiale, comportant une partie de col (2) dont au moins une portion est cristallisée, et un corps thermodurci (3) qui est coloré en étant transparent ou opaque, caractérisé en ce que:

(a) la portion supérieure (5) uniquement de la partie (2) de col est entièrement cristallisée, est plus épaisse et de plus grand diamètre extérieur qu'une portion intermédiaire (6) de la partie de col (2), laquelle portion intermédiaire est elle-même plus épaisse que le corps (3);

(b) la moitié supérieure (5a) de la portion supérieure (5) de la partie de col (2) est plus épaisse et de plus grand diamètre extérieur que la moitié inférieure (5b) de la portion supérieure (5) de la partie de col (2); et

(c) la partie de col (2) est épaulée entre la moitié supérieure (5a) de la portion supérieure (5) de la partie de col (2) et la moitié inférieure (5b) de cette portion supérieure, et également entre la moitié inférieure (5b) de la portion supérieure (5) de la partie de col (2) et la portion intermédiaire (6) de la partie de col (2).

## Patentanspruch

1. Hohler blasgeformter Behälter (1) aus biaxial orientiertem Polyethylenterephthalat oder gesättigtem Polyesterharz mit einem Halsabschnitt (2), welcher zumindest teilweise kristallisiert ist, und einem wärmegehärteten Körper (3), welcher transparent oder opak gefärbt ist, dadurch gekennzeichnet, daß:

(a) der obere Teil (5) nur des Halsabschnittes (2) vollständig kristallisiert und dicker ist sowie einen größeren Außendurchmesser aufweist als ein Zwischenteil (6) des Halsabschnittes (2), welcher Zwischenteil selbst dicker ist als der Körper (3);

(b) die obere Hälfte (5a) des oberen Teils (5) des Halsabschnittes (2) dicker ist und einen größeren Außendurchmesser aufweist als die untere Hälfte (5b) des oberen Teils (5) des Halsabschnittes (2); und

(c) der Halsabschnitt (2) zwischen der oberen Hälfte (5a) des oberen Teils (5) des Halsabschnittes (2) und der unteren Hälfte (5b) dieses oberen Teils und ebenso zwischen der unteren Hälfte (5b) des oberen Teils (5) des Halsabschnittes (2) und dem Zwischenteil (6) des Halsabschnittes (2) abgestuft ist.

1